(19) Europäisches Patentamt
European Patent Office
Office européen des brevets

(11) **EP 2 382 149 B1**

(12) **EUROPEAN PATENT SPECIFICATION**

(45) Date of publication and mention of the grant of the patent:
**23.12.2015 Bulletin 2015/52**

(21) Application number: **10729121.3**

(22) Date of filing: **04.01.2010**

(51) Int Cl.:
*B66B 5/02* *(2006.01)*  *H02J 15/00* *(2006.01)*
*B66B 1/34* *(2006.01)*  *B66B 1/30* *(2006.01)*

(86) International application number:
**PCT/FI2010/000001**

(87) International publication number:
**WO 2010/079258 (15.07.2010 Gazette 2010/28)**

(54) **TRANSPORTATION SYSTEM**

TRANSPORTSYSTEM

SYSTÈME DE TRANSPORT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.01.2009 FI 20090008**

(43) Date of publication of application:
**02.11.2011 Bulletin 2011/44**

(73) Proprietor: **Kone Corporation**
**00330 Helsinki (FI)**

(72) Inventors:
• **KAUPPINEN, Tuukka**
**200051 Shanghai (CN)**
• **LAAKSONHEIMO, Jyrki**
**05810 Hyvinkää (FI)**
• **HYTTI, Pekka**
**FIN-05800 Hyvinkää (FI)**

(74) Representative: **Graf Glück Kritzenberger**
**Hermann-Köhl-Strasse 2a**
**93049 Regensburg (DE)**

(56) References cited:
**EP-A1- 0 471 348**      **EP-A1- 0 471 348**
**EP-A2- 1 035 637**      **JP-A- 7 271 681**
**JP-A- 2005 089 096**    **US-A- 4 124 103**
**US-A- 4 754 851**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a transportation system as defined in the preamble of claim 1 and to a method as defined in the preamble of claim 11 for backing up the operational state of a transportation system.

In transportation systems, such as an elevator system, usually battery backup is used in order to enable selected system functions to be maintained even during a power failure. If an elevator car is carrying passengers at the onset of a power failure, battery backup can be used to maintain a communication connection from the elevator car to a maintenance center; similarly, power can be supplied from the battery for illumination of the elevator car. For such purposes, the battery is generally fitted in conjunction with the elevator car, e.g. on the top of the elevator car.

One of the problems with battery backup is unreliability of batteries. Batteries deteriorate in a short time, and the number of charge/discharge cycles they can tolerate is quite limited. Moreover, e.g. ambient temperature has an effect on the service life of batteries and also restricts their service conditions.

In many types of electronic applications, there has in recent years emerged the use of so-called supercapacitors, which are also called ultracapacitors or double-layer capacitors. There are different types of supercapacitors, depending on the principle and material of manufacture, but a feature characteristic of all these is a high energy storing capacity. As compared to conventional capacitors, the square area of the charge surfaces of supercapacitors has often been increased by using active carbon or some other solution increasing the square area. Supercapacitors usually have an energy storing capacity several tens or even hundreds of times higher as compared to conventional capacitors.

Publication JP 9322430 proposes an arrangement that uses a battery with a supercapacitor fitted in parallel with it in order to reduce the number of battery charge/discharge cycles so as to increase the service life of the battery.

Publication JP 7271681 proposes a solution where power is supplied to a semiconductor memory device from a battery or alternatively from a supercapacitor.

The JP 2005 089096 discloses an elevator system having a power back-up system comprising capacitors which are charged by regeneration operation of the elevator for power running or power failure operation.

The US 4,754,851 discloses an elevator with a position detector having a non-volatile semiconductor memory for the actual car position which ensures the reestablishing of the car position data after a power anomaly to the value stored before the anomaly happened.

The object of the invention is to solve the above-mentioned problems as well as problems appearing from the description of the invention presented below. To this end, the present invention proposes a new type of solution for backing up the operational state of a transportation system in connection with an operational anomaly in power supply.

The transportation system of the invention is characterized by what is disclosed in claim 1. The method of the invention for backing up the operational state of an elevator system is characterized by what is disclosed in claim 11. Other embodiments of the invention are characterized by what is disclosed in the other claims. Inventive embodiments are also presented disclosed in the description part and drawings of the present application. The inventive content may also consist of several separate inventions, especially if the invention is considered in the light of explicit or implicit sub-tasks or with respect to advantages or sets of advantages achieved. In this case, some of the attributes contained in the claims below may be superfluous from the point of view of separate inventive concepts. The features of different embodiments of the invention can be applied in connection with other embodiments within the scope of the basic inventive concept

The **transportation system** of the invention includes a control apparatus for controlling the operation of the transportation system. The control apparatus comprises a storage circuit having a non-volatile memory for storing the operational state of the transportation system. The control apparatus is also provided with a power supply backup circuit comprising a capacitive energy storage. The power supply backup circuit is adapted to maintain supply of power from the energy storage to the storage circuit for a given length of time in connection with an operational anomaly in power supply to the control apparatus. Thus, when the supply of power to the control apparatus is interrupted, the power supply backup circuit can maintain power supply to the storage circuit for a given length of time after the instant of interruption of the supply of power. It is thus possible to store parameters describing the operational state of the transportation system into the non-volatile memory of the storage circuit even after the interruption of power supply. A parameter describing the operational state of the transportation system is e.g. motion data of the transportation system, such as velocity, acceleration / deceleration and position of the transportation system and/or the motor driving the transportation system, and e.g. the positional angle between rotor and stator of the motor driving the transportation system. In connection with an interruption of power supply to the transportation system, the mechanical brake of the transportation system is engaged to decelerate the motion of the transportation system. In this case, the motion data of the braking transportation system can be updated as described in the invention even after an interruption of power supply to the transportation system, and the updated motion data can be stored into the non-volatile memory in spite of the power failure. In this connection, 'non-volatile memory' refers to a memory which preserves the data stored in it despite an interruption of power supply. After the power failure, the motion data can thus be restored from the non-volatile memory, and the restored motion data can be used for control of the operation of the transportation system. For example, the exact position angle between the rotor and stator of the electromotor driving the transportation apparatus can be restored in this way, so the position angle can be controlled without an absolute detector in spite of a power failure. Other parameters determining the operational state of the control devices of the transportation system can also be stored into and restored from the non-volatile memory in a corresponding manner. The transportation system referred to here may be e.g. a passenger or service elevator system, an escalator system, a moving walkway system, a roller hoist system, a crane system, a vehicle system, or a conveyor system for transportation of goods and/or raw materials. In this connection, 'transportation apparatus' refers to that part of the transportation system by means of which the object to be transported is moved.

The aforesaid non-volatile memory may be e. g. an EEPROM memory, a flash memory or a corresponding semiconductor memory, which preserves the date stored in it even after an Interruption of power supply to the memory. The non-volatile memory may also contain other data, such as the software of the control apparatus of the transportation system. The storage circuit and its memory may consist of several components, or It may also be integrated as a single component. The storage circuit may also comprise e.g. a microcontroller.

According to one or more embodiments, the storage circuit is adapted to store the operational state of the transportation system when the power supply backup circuit is supplying power to the storage circuit.

According to the invention, the power supply backup circuit comprises a supercapacitor, which serves as a capacitive energy storage. The use of a supercapacitor as an energy source during an operational anomaly in power supply is advantageous because the number of charge/discharge cycles of a supercapacitor is not limited as e.g. in the case of batteries. The service life of supercapacitors is therefore also longer than that of batteries, which naturally improves the reliability of power supply backup; improved reliability of power supply backup again increases the reliability and safety of the transportation system. The operating ambient temperature range of supercapacitors is also wider than that of batteries, and they tolerate low temperatures better than batteries.

If a voltage equalizing circuit is fitted in parallel with a supercapacitor, then it is possible to series-connect several supercapacitors with equalizing circuits. In such a connection, the function of the voltage equalizing circuits is, on the one hand, to equalize the voltages of the series-connected capacitors to the same value and, on the other hand, to limit the voltage of the capacitor fitted in parallel with the equalizing circuit to the highest voltage boundary value allowed. The voltage tolerance of supercapacitors is typically quite low, only about two to three volts, so the terminal-to-terminal voltage of supercapacitors can be increased via series-connection, and this may also make it easier to adapt the voltage to the rest of the current circuit.

According to the invention, the power supply backup circuit comprises a charging circuit and a discharging circuit for charging and discharging the aforesaid supercapacitor, and the charging circuit is fitted between the power supply circuit of the control apparatus and the power supply backup circuit.

According to one or more embodiments of the invention, the storage circuit comprises determination of the operational state of power supply to the control apparatus and, on detecting an operational anomaly in power supply, the storage circuit is adapted to store into the non-volatile memory at least one parameter describing the operational state of the transportation system.

According to one or more embodiments of the invention, the storage circuit is adapted to read a message generated by a control device of the transportation system and determining the operational state of the control device and to store this message into the non-volatile memory.

According to one or more embodiments of the invention, after the operational anomaly in power supply to the control apparatus has disappeared, the storage circuit is adapted to read from the non-volatile memory a parameter stored there in connection with the operational anomaly and describing the operational state of the transportation system.

According to one or more embodiments of the invention, power supply from the power supply circuit of the control apparatus to the storage circuit is interrupted by means of a switch in connection with an operational anomaly in power supply to the control apparatus.

In the **method** of the invention for backing up the operational state of a transportation system, a storage circuit having a non-volatile memory is fitted in a control apparatus controlling the transportation system; a power supply backup circuit is fitted in the control apparatus; a capacitive energy storage is fitted in the power supply backup circuit; and power is supplied from the aforesaid energy storage to the storage circuit for a given length of time in connection with an operational anomaly in power supply to the control apparatus of the transportation system.

Instead of a supercapacitor, the power supply backup can also be implemented using some other type of capacitor having a sufficient energy storing capacity. A possible capacitor type is electrolytic capacitor. Also, e.g. certain tantalite and ceramic capacitors have a quite good energy storing capacity.

In the following, the invention is described in detail by referring to embodiment examples and the attached drawings, of which

Fig. 1    represents an elevator system comprising an arrangement according to the invention fitted in it

Fig. 2    represents an arrangement according to the invention for backing up the operational state of a transportation system

Fig. 3    represents a power supply backup circuit according to the invention

Fig. 4    represents the voltage between the terminals of a capacitive energy storage according to the invention

**Embodiment examples**

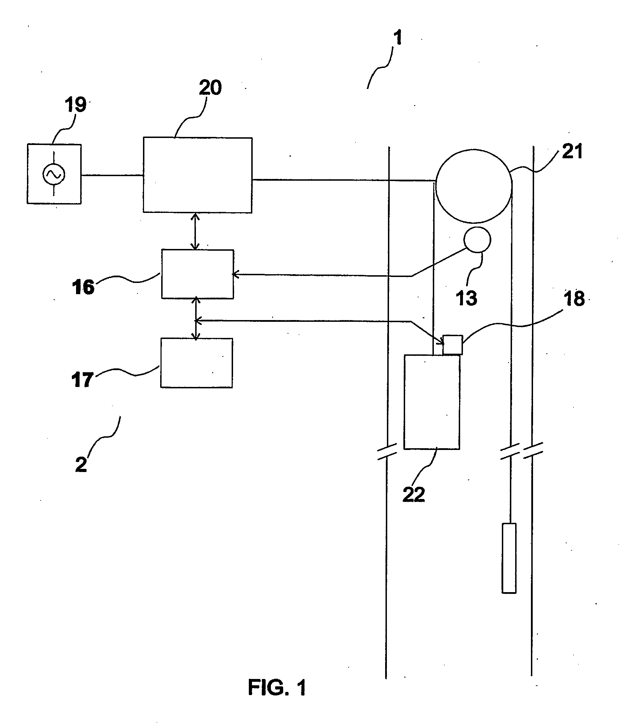

In the elevator system according to Fig. 1, the elevator car 22 and counterweight are suspended by elevator ropes passed about the drive sheave 21 of the elevator motor. The elevator system 1 comprises a control apparatus 2 for controlling the operation of the elevator system. The electric motor driving the elevator car is supplied with power from an electric network 19 via a frequency converter 20. A control unit 16 controlling the movement of the elevator car again comprises a control loop, wherein the velocity 13 of the drive sheave of the elevator motor is measured by an encoder. The current supplied to the elevator motor is regulated by means of the frequency converter 20 so that the measured velocity 13 of the drive sheave is adjusted to a velocity corresponding to a velocity reference value. The velocity reference value is calculated as a function of the position of the elevator car moving in the elevator shaft. The control apparatus 2 of the elevator system also comprises a control unit 17 controlling traffic in the elevator system, one of the functions of said unit being to allocate the elevator calls to be served in accordance with allocation criteria applied in each situation. A control unit 18 fitted in conjunction with the elevator car takes care of e.g. the handling of car calls; in addition, there is fitted on the top of the elevator car a battery backup unit, from which power is supplied to the elevator system e.g. during a power failure. The elevator system control apparatus 2 also comprises various safety devices used to ensure safety of the elevator system both during normal operation and also in different anomalous or fault situations in the operation. Such safety devices are e.g. an elevator machine brake control unit, an elevator car overspeed monitoring unit and a landing door position monitoring unit (which are not shown in the figure).

The elevator system control apparatus 2 is supplied with power from an electric network 19 via the power supply circuit 5 of the control apparatus. The power supply circuit 5 of the control apparatus comprises an AC/DC converter, which converts the 230 V electric network voltage into a 24 V direct voltage signal for the control apparatus. Different control devices further comprise DC/DC converters, by means of which the 24 V direct voltage can be adapted according to the individual voltage and power requirement of each control device.

The elevator car movement control unit 16 comprises a microcontroller 4 having a non-volatile flash memory where the software of the movement control unit 16 is stored. Instead of a flash memory, the non-volatile memory used may also be an EEPROM memory or some other non-volatile semiconductor memory. The microcontroller 4 is also used to implement elevator car speed control. Therefore, the microcontroller repeatedly reads certain parameters describing the operational state of the elevator system, such as the motion signal 13 of the encoder of the elevator motor. In addition, the microcontroller calculates from the encoder signal the position angle between the rotor and stator of the elevator motor and also elevator car position data.

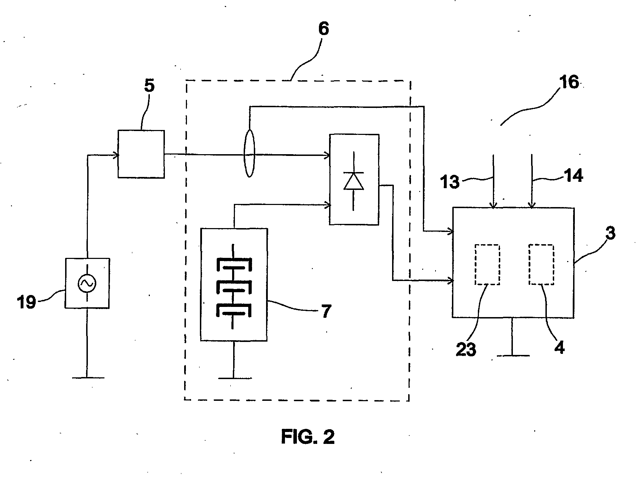

Fitted in the elevator car movement control unit 16 is a power supply backup circuit 6, which comprises an energy storage formed from supercapacitors 7. Fig. 2 represents a power supply backup circuit that may be used. The power supply backup circuit 6 is adapted to maintain supply of power from the supercapacitors 7 to the microcontroller 4 as well as to the components associated with the latter during an operational anomaly in power supply. During an operational anomaly in power supply, the microcontroller together with its associated components serves as a storage circuit 3. Thus, upon detecting an interruption in the supply of power from the power supply circuit 5, the microcontroller begins storing the position angle between rotor and stator calculated from the encoder signal as well as the elevator car position data into the flash memory. The microcontroller goes on storing these parameters describing the operational state of the elevator system until the movement of the elevator car is stopped by the elevator motor's machine brake, which was engaged at the onset of the power failure. When power supply is restored after the failure, the microcontroller reads from the flash memory the position angle between rotor and stator as well as the elevator car position data, which were preserved through the power failure. This enables the operation of the elevator system to be continued normally, without necessarily requiring any separate measures for determining the position angle / elevator car position data.

Fig. 2 represents an arrangement where the control apparatus of the transportation system comprises a power supply backup circuit 6 via which power is supplied to the storage circuit 3 in connection with an operational anomaly in power supply. During normal operation of the transportation system, the storage circuit 3 is supplied with power from the power supply circuit 5 of the control apparatus. The power supply backup circuit 6 comprises an energy storage 7 provided with mutually series-connected supercapacitors.

The control electronics 23 of the storage circuit 3 reads the signal indicating the operational state of the power supply circuit 5. Upon detecting an operational anomaly, the control electronics 23 begins storing the parameters indicating the operational state of the transportation system into the non-volatile memory 4. The parameters stored in connection with an operational anomaly in power supply comprise e.g. movement data 13 of the transportation apparatus. The storage circuit control electronics also reads messages 14 generated by the control devices of the transportation system and determining the operational state of the control devices, and the messages thus read are stored into the non-volatile memory 4. These messages may be e.g. status and failure messages, and the messages may also contain other data needed by the control devices, such as system and control parameters of the apparatus.

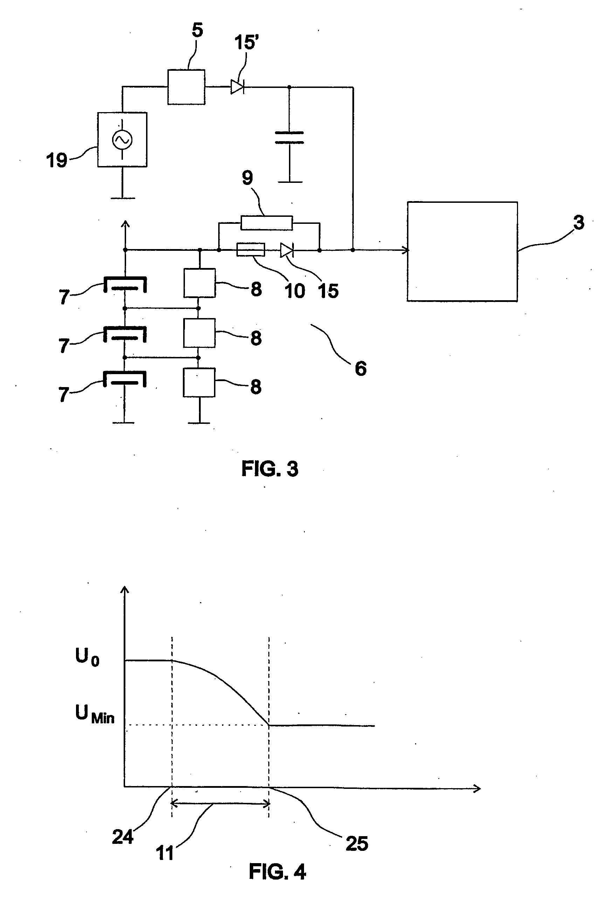

Fig. 3 represents a power supply backup circuit according to the invention. The backup circuit is applicable for use e.g. in the applications represented by Figs. 1 and 2. The backup circuit comprises mutually series-connected supercapacitors 7, each of which has a voltage equalizing circuit 8 fitted in parallel with it. The voltage between the terminals of the energy storage thus formed is normally somewhat lower than the voltage of the power supply circuit 5 of the control apparatus. Power supply to the storage circuit 3 is therefore obtained from the power supply circuit of the control apparatus; at the same time, the supercapacitors 7 are charged with energy from the power supply circuit 5 via a charging resistor 9. If the voltage of the power supply circuit 5 of the control apparatus falls, then diode 15' is switched to the reverse blocking state and power supply to the storage circuit 3 is interrupted. Now the diode 15 fitted in parallel with the charging resistor 9 is turned on, and power supply to the storage circuit is maintained from the supercapacitors 7. Fitted in series with diode 15 is also a fuse 10, which serves as an overcurrent protector for the supercapacitors e.g. in a short circuit situation.

Fig. 4 represents the voltage measured across the series-connected supercapacitors as a function of time. The supercapacitors form a capacitive energy storage such as can be used e.g. in conjunction with the embodiment examples represented by Figs. 1 - 3. At instant 24 shown in Fig. 4 there occurs an operational anomaly in power supply to the transportation system, with the result that the power supply backup circuit is engaged to maintain supply of power from the supercapacitors to the storage circuit. At the same time, the voltage of the supercapacitors starts falling from its initial value $U_0$. At instant 25, the voltage has fallen below the allowed minimum limit $U_{min}$, causing the under-voltage monitoring function of the storage circuit to interrupt the operation of the storage circuit. The rate of decrease of voltage depends on tne power requirement $P_b$ of the storage circuit. The capacity of the supercapacitors is so selected that movement of the transportation system during an operational anomaly in power supply will have stopped within the operating time $t_b$ of the power supply backup circuit 6.

The required capacity C [F] of the supercapacitors can be solved from the equation below:

$$C = \frac{2P_b * t_b}{U_0^2 - U_{min}2}$$

The invention has been described above by referring to a few embodiment examples. It is obvious to a person skilled in the art that the invention is not exclusively limited to the above-described examples, but that many other embodiments are possible within the scope of the inventive idea defined in the claims.

## Claims

1. A transportation system (1) having a control apparatus (2) for controlling the operation of the transportation system; said control apparatus comprising a storage circuit (3) provided with a non-volatile memory (4) for storing the operational state of the transportation system; the control apparatus (2) being provided with a power supply backup circuit (6) which comprises a capacitive energy storage (7); and which power supply backup circuit (6) is adapted to maintain power supply from the said energy storage (7) to the storage circuit (3) for a given length of time (11) in connection with an operational anomaly in power supply to the control apparatus (2), wherein the storage circuit (3) comprises a determination of the operational state of the power supply (5) to the control apparatus and that, on detecting an operational anomaly in power supply, the storage circuit (3) is adapted to store at least one parameter (13, 14) describing the operational state of the transportation system into the non-volatile memory (4).

2. A transportation system according to claim 1, **characterized in that** the storage circuit (3) is adapted to store the operational state of the transportation system when the power supply backup circuit (6) is supplying power to the storage circuit.

3. A transportation system according to any one of the preceding claims, **characterized in that** the said power supply backup circuit (6) comprises a supercapacitor.

4. A transportation system according to any one of the preceding claims, **characterized in that** the power supply backup circuit (6) comprises at least two mutually series-connected supercapacitors (7), at least one of which has a voltage equalizing circuit (8) fitted in parallel with it.

5. A transportation system according to any one of the preceding claims, **characterized in that** the power supply backup circuit (6) comprises a charging circuit (9) and a discharging circuit (10) for charging and discharging the aforesaid supercapacitor (7), and that the charging circuit (9) is fitted between the power supply circuit (5) of the control apparatus and the power supply backup circuit (6).

6. A transportation system according to any one of the preceding claims, **characterized in that** the storage circuit (3) is adapted to read transportation system movement data (13) and to store the movement data read by it into the non-volatile memory (4).

7. A transportation system according to any one of the preceding claims, **characterized in that** the storage circuit (3) is adapted to read a mes- sage (14) generated by a control device of the transportation system and determining the operational state of the control device and to store this message into the non-volatile memory (4).

8. A transportation system according to any one of the preceding claims, **characterized in that**, after the operational anomaly in power supply to the control apparatus (2) has disappeared, the storage circuit (3) is adapted to read from the non-volatile memory (4) a parameter (13,14) stored there in connection with the operational anomaly and describing the operational state of the transportation system.

9. A transportation system according to any one of the preceding claims, **characterized in that** power supply from the power supply circuit (5) of the control apparatus to the storage circuit (3) is interrupted by means of a switch (15') in connection with an operational anomaly in power supply to the control apparatus.

10. A transportation system according to any one of the preceding claims, **characterized in that** the non-volatile memory (4) is an on EEPROM and / or flash memory.

11. A method for backing up the operational state of a transportation system, in which method:

- a storage circuit (3) having a non-volatile memory (4) is fitted in the control apparatus of the transportation system, wherein
- a power supply backup circuit (6) is fitted in the control apparatus (2);
- a capacitive energy storage (7) is fitted in the power supply backup circuit (6);
- power is supplied from the said energy storage (7) to the storage circuit (3) for a given length of time (11) in connection with an operational anomaly in power supply to the control apparatus (2) of the transportation system,

wherein the storage circuit (3) determines the operational state of the power supply (5) to the control apparatus and that, on detecting an operational anomaly in power supply, the storage circuit (3) stores at least one parameter (13, 14) describing the operational state of the transportation system into the non-volatile memory (4).

**Patentansprüche**

1. Transportsystem (1) mit einer Steuerung (2) zum Steuern der Tätigkeit des Transportsystems; welche Steuerung eine Speicherschaltung (3) aufweist, die mit einem nicht flüchtigen Speicher (4) zum Speichern des Betriebszustands des Transportsystems versehen ist; wobei die Steuerung (2) mit einer Stromversorgungs-Sicherungsschaltung (6) versehen ist, die einen kapazitiven Energiespeicher (7) enthält; und welche Stromversorgungs-Sicherungsschaltung (6) dazu konfiguriert ist, eine Stromversorgung von dem Energiespeicher (7) zu der Speicherschaltung (3) über eine gegebene Zeitspanne (11) in Verbindung mit einer Betriebsanomalität in der Stromversorgung zu der Steuerung (2) aufrecht zu erhalten, wobei die Speicherschaltung (3) eine Ermittlung des Betriebszustands der Stromversorgung (5) zu der Steuerung enthält, und dass beim Detektieren einer Betriebsanomalität in der Stromversorgung die Speicherschaltung (3) dazu konzipiert ist, wenigstens einen Parameter (13, 14) in den nicht flüchtigen Speicher (4) zu speichern, der den Betriebszustand des Transportsystems beschreibt.

2. Transportsystem nach Anspruch 1, **dadurch gekennzeichnet, dass** die Speicherschaltung (3) dazu konzipiert ist, den Betriebszustand des Transportsystems zu speichern, wenn die Stromversorgungs-Sicherungsschaltung (6) der Speicherschaltung Strom zuführt.

3. Transportsystem nach einem der vorhergehenden Ansprüche, **dadurch gekennzeichnet, dass** die Stromversorgungs-Sicherungsschaltung (6) einen Superkondensator enthält.

4. Transportsystem nach einem der vorhergehenden Ansprüche, **dadurch gekennzeichnet, dass** die Stromversorgungs-Sicherungsschaltung (6) wenigstens zwei in Serie geschaltete Superkondensatoren (7) enthält, von denen wenigstens einer eine dazu parallel geschaltete Spannungsausgleichsschaltung (8) hat.

5. Transportsystem nach einem der vorhergehenden Ansprüche, **dadurch gekennzeichnet, dass** die Stromversorgungs-Sicherungsschaltung (6) eine Ladeschaltung (9) und eine Entladeschaltung (10) zum Laden und Entladen des vorgenannten Superkondensators (7) enthält, und dass die Ladeschaltung (9) zwischen der Stromversorgungsschaltung (5) der Steuerung und der Stromversorgungs-Sicherungsschaltung (6) angeordnet ist.

6. Transportsystem nach einem der vorhergehenden Ansprüche, **dadurch gekennzeichnet, dass** die Speicherschaltung (3) dazu konzipiert ist, Bewegungsdaten (13) des Transportsystems zu lesen und die gelesenen Bewegungsdaten in den nicht flüchtigen Speicher (4) zu schreiben.

7. Transportsystem nach einem der vorhergehenden Ansprüche, **dadurch gekennzeichnet, dass** die Speicherschaltung (3) dazu konzipiert ist, eine Nachricht (14) zu lesen, die durch eine Steuerung des Transportsystems generiert wurde und die den Betriebszustand der Steuereinrichtung bestimmt, und diese Nachricht in den nicht flüchtigen Speicher (4) zu speichern.

8. Transportsystem nach einem der vorhergehenden Ansprüche, **dadurch gekennzeichnet, dass** nachdem die Betriebsanomalität in der Stromversorgung zu der Steuerung (2) verschwunden ist, die Speicherschaltung (3) dazu konzipiert ist, von dem nicht flüchtigen Speicher (4) einen Parameter (13, 14) zu lesen, der dort in Verbindung mit der Betriebsanomalität gespeichert ist und den Betriebszustand des Transportsystems beschreibt.

9. Transportsystem nach einem der vorhergehenden Ansprüche, **dadurch gekennzeichnet, dass** die Stromversorgung von der Stromversorgungsschaltung (5) der Steuerung zu der Speicherschaltung (3) mittels eines Schalters (15) in Verbindung mit einer Betriebsanomalität in der Stromversorgung zu der Steuerung unterbrochen wird.

10. Transportsystem nach einem der vorhergehenden Ansprüche, **dadurch gekennzeichnet, dass** der nicht flüchtige Speicher (4) ein EEPROM und/oder Flash-Speicher ist.

11. Verfahren zum Absichern des Betriebszustands eines Transportsystems, in welchem Verfahren:

    - eine Speicherschaltung (3) mit einem nicht flüchtigen Speicher (4) in der Steuerung des Transportsystems angeordnet ist, wobei
    - eine Stromversorgungs-Sicherungsschaltung (6) in der Steuerung (2) angeordnet ist;
    - ein kapazitiver Energiespeicher (7) in der Stromversorgungs-Sicherungsschaltung (6) angeordnet ist;
    - der Speicherschaltung (3) über einen gegebenen Zeitrahmen (11) Strom von dem Energiespeicher (7) in Verbindung mit einer Betriebsanomalität in der Stromversorgung zu der Steuerung (2) des Transportsystems zugeführt wird, wobei die Speicherschaltung (3) den Betriebszustand der Stromversorgung (5) zu der Steuerung bestimmt, und dass beim Detektieren eine Betriebsanomalität in der Stromversorgung die Speicherschaltung (3) wenigstens einen Parameter (13, 14) in dem nicht flüchtigen Speicher (4) speichert, der den Betriebszustand des Transportsystems beschreibt.

**Revendications**

1. Système de transport (1) comportant un appareil de commande (2) pour commander le fonctionnement du système de transport ; ledit appareil de commande comprenant un circuit de stockage (3) pourvu d'une mémoire non volatile (4) pour stocker l'état fonctionnel du système de transport ; l'appareil de commande (2) étant pourvu d'un circuit de secours de l'alimentation électrique (6) qui comprend un stockage d'énergie capacitive (7) ; et lequel circuit de secours de l'alimentation électrique (6) est adapté pour maintenir l'alimentation électrique provenant dudit stockage d'énergie (7) et destinée au circuit de stockage (3) pendant un laps de temps donné (11) en liaison avec une anomalie fonctionnelle dans l'alimentation électrique de l'appareil de commande (2), dans lequel le circuit de stockage (3) comprend une détermination de l'état fonctionnel de l'alimentation électrique (5) de l'appareil de commande et dans lequel, lors de la détection d'une anomalie fonctionnelle dans l'alimentation électrique, le circuit de stockage (3) est adapté pour stocker dans la mémoire non volatile (4) au moins un paramètre (13, 14) décrivant l'état fonctionnel du système de transport.

2. Système de transport selon la revendication 1, **caractérisé en ce que** le circuit de stockage (3) est adapté pour stocker l'état fonctionnel du système de transport lorsque le circuit de secours de l'alimentation électrique (6) alimente le circuit de stockage en courant.

3. Système de transport selon l'une quelconque des revendications précédentes, **caractérisé en ce que** le circuit de secours de l'alimentation électrique (6) comprend un supercondensateur.

4. Système de transport selon l'une quelconque des revendications précédentes, **caractérisé en ce que** le circuit de secours de l'alimentation électrique (6) comprend au moins deux supercondensateurs (7) mutuellement raccordés en série, au moins l'un d'entre eux ayant un circuit d'égalisation de tension (8) monté en parallèle avec celui-ci.

5. Système de transport selon l'une quelconque des revendications précédentes, **caractérisé en ce que** le circuit de secours de l'alimentation électrique (6) comprend un circuit de charge (9) et un circuit de décharge (10) pour charger et décharger le supercondensateur (7) mentionné précédemment, et par le fait que le circuit de charge (9) est monté entre le circuit d'alimentation électrique (5) de l'appareil et le circuit de secours de l'alimentation électrique (6).

6. Système de transport selon l'une quelconque des revendications précédentes, **caractérisé en ce que** le circuit de stockage (3) est adapté pour lire les données de mouvement du système de transport (13) et pour stocker dans la mémoire non volatile (4) les données de mouvement lus par celui-ci.

7. Système de transport selon l'une quelconque des revendications précédentes, **caractérisé en ce que** le circuit de stockage (3) est adapté pour lire un message (14) généré par un dispositif de commande du système de transport et déterminant l'état fonctionnel du dispositif de commande et pour stocker ce message dans la mémoire non volatile (4).

8. Système de transport selon l'une quelconque des revendications précédentes, **caractérisé en ce que**, une fois que l'anomalie fonctionnelle dans l'alimentation électrique de l'appareil de commande (2) a disparu, le circuit (3) est adapté pour lire à partir de la mémoire non volatile (4) un paramètre (13, 14) y étant stocké en liaison avec l'anomalie fonctionnelle et décrivant l'état fonctionnel du système de transport.

9. Système de transport selon l'une quelconque des revendications précédentes, **caractérisé en ce que** l'alimentation électrique depuis le circuit d'alimentation électrique (5) de l'appareil de commande destinée au circuit de stockage (3) est interrompue au moyen d'un commutateur (15') en liaison avec une anomalie fonctionnelle dans l'alimentation en courant de l'appareil de commande.

10. Système de transport selon l'une quelconque des revendications précédentes, **caractérisé en ce que** la mémoire non volatile (4) est une EEPROM et/ou une mémoire flash.

11. Procédé de sauvegarde l'état fonctionnel d'un système de transport, dans lequel procédé :

   - un circuit de stockage (3) comportant une mémoire non volatile (4) est monté dans l'appareil de commande du système de transport, dans lequel
   - un circuit de secours de l'alimentation électrique (6) est monté dans l'appareil de contrôle (2) ;

   - un stockage d'énergie capacitive (7) est monté dans le circuit de secours de l'alimentation électrique (6) ;
   - du courant est fourni depuis ledit stockage d'énergie (7) destiné au circuit de stockage (3) pendant un laps de temps donné (11) en liaison avec une anomalie fonctionnelle dans l'alimentation électrique de l'appareil de commande (2) du système de transport ;

dans lequel le circuit de stockage (3) détermine l'état fonctionnel de l'alimentation électrique (5) de l'appareil de commande et dans lequel, lors de la détection d'une anomalie fonctionnelle dans l'alimentation électrique, le circuit de stockage (3) stocke dans la mémoire non volatile (4) au moins un paramètre (13, 14) décrivant l'état fonctionnel du système de transport.

**FIG. 1**

**FIG. 2**

**FIG. 3**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9322430 B
- JP 7271681 B
- JP 2005089096 A
- US 4754851 A